(19) Europäisches Patentamt
European Patent Office
Office européen des brevets

(11) Publication number: 0 172 274 B1

# (12) EUROPEAN PATENT SPECIFICATION

(45) Date of publication of patent specification: 10.05.89

(51) Int. Cl.$^4$: C 08 G 73/12

(21) Application number: 84304317.5

(22) Date of filing: 26.06.84

## (54) A method for preparing polyimide prepolymers.

(43) Date of publication of application:
26.02.86 Bulletin 86/09

(45) Publication of the grant of the patent:
10.05.89 Bulletin 89/19

(84) Designated Contracting States:
DE FR GB

(56) References cited:
EP-A-0 028 419
DE-A-1 962 845
FR-A-2 083 630
FR-A-2 085 880
US-A-4 324 882

(73) Proprietor: TORAY INDUSTRIES, INC.
2, Nihonbashi-Muromachi 2-chome Chuo-ku
Tokyo 103 (JP)

(72) Inventor: Kadoi, Sho Mitsuihigashiyama Heights
2-28-1, Kiyozumi-cho Chikusa-ku
Nagoya-shi Aichi-ken (JP)
Inventor: Aya, Toshihiko
2-19, Matsuzono-cho Mizuho-ku
Nagoya-shi Aichi-ken (JP)

(74) Representative: Ellis, John Clifford Holgate et al
MEWBURN ELLIS & CO. 2/3 Cursitor Street
London EC4A 1BQ (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 172 274 B1

**Description**

The present invention relates to a novel method of preparing polyimide prepolymers excellent in heat resistance from polyamines and dicarboxylic acids having olefinic double bonds or derivatives thereof.

One of the methods so far well known to prepare polyimide prepolymers is a two stage process in which a double bond-containing imide compound is isolated after being prepared from polyamine and an aliphatic dicarboxylic anhydride or a derivative thereof equivalent to the amino group of the polyamine and subsequently the obtained imide compound is reacted with polyamine to prepare a polyimide prepolymer. For example, maleamic acid obtained by reaction of 1 mole of maleic anhydride with 0.5 mole of diaminodiphenylmethane undergoes imide ring closure to form bismaleimide (U.S. Pat. NO. 3,839,358 for example) and the bismaleimide is reacted with diaminodiphenylmethane to yield polyaminobismaleimide prepolymer. This method is conventionally used (U.S. Pat. No. 3,562,223 and U.S. Pat. No. 3,658,764 for example) and commercialized.

However, this two stage method is economically disadvantageous because of the complexity of the first stage of the process in which a double bond-containing imide compound is prepared, followed by isolation and refining. Therefore, a study has been made in the industry concerned of one stage methods in which a polyamidic acid prepolymer obtained by reaction of a dicarboxylic anhydride having olefinic double bonds with a diamine of excess equivalent is subjected to dehydrating ring closure to prepare the polyimide prepolymer. As a result, two methods using different means of dehydrating ring closure have been proposed. One of the two methods is a heat ring closure method in which an azeotropic water removing agent such as benzene (JP—A—4644/71 and 99296/73, for example) or a sulphuric acid catalyst (JP—A—3846/71) is usually used in order to accelerate heat ring closure. The other one is the acetic anhydride method (JP—A—18119/74, for example) in which an acetic anhydride is used in combination with a metal salt of acetic acid and a tertiary amine as the accelerator. However, the former heat ring closure method of these conventional one stage methods is almost impracticable because it has the drawback that the imide ring closure rate of the finally obtained polyimide prepolymer is as low as 50 to 70%, thus leaving a considerable amount of amide unit, with the result that foaming occurs during curing of the prepolymer to give a number of voids in the moulding. Moreover the latter acetic anhydride method has the vital drawback that although imide ring closure rate of the finally obtained polyimide prepolymer can be brought to a practicable level as high as more than 90%, the curing speed of the prepolymer during moulding is very slow and the heat resistance of the finally obtained cured moulding is extremely low.

A further suggestion is to be found in EP—A—18419 where an aniline-formaldehyde resin is reacted with two dicarboxylic acid anhydrides, one of which has olefinic double bonds and the other of which is aromatic in character, the said reactions being followed by dehydration and ring closure. The use of polyphosphoric acid anhydride as a dehydrating agent is suggested, though not exemplified.

An object of the present invention is to provide a novel method which enables the one stage preparation of polyimide prepolymers from dicarboxylic acids having olefinic double bonds or derivatives thereof and polyamines of excess equivalent without isolating the intermediate in the course of the synthesis.

An object of the invention is to prepare polyimide prepolymers having a practicable curing speed, which cure without the occurrence of foaming and which are capable of forming a cured moulding excellent in heat resistance.

According to the present invention we provide a method of preparing polyimide prepolymers which comprises effecting a reaction between a polyamine represented by the following general formula (I),

$$R—(NH_2)_n \qquad (I)$$

where R is an organic group having not less than 2 carbon atoms and n is an integer of 2 or above, and a compound selected from dicarboxylic acids having olefinic double bonds and alkyl esters and anhydrides thereof in the ratio of between 0.52 moles and 0.8 moles of the latter per mole of amino group contained in said polyamine in the presence of an oxide compound of phosphorus in an amount of 0.1—10 dehydrating equivalents per mole of the acid component.

Polyamines used in the present invention are the compounds represented by the general formula $R—(NH_2)_n$ (where R is an organic group having at least two carbon atoms and n is an integer of 2 or above), and R includes an aliphatic group, an aromatic group, an alicyclic group or a hetero ring group, or any combination of these groups, or any two or more of such groups linked by a bonding group such as oxygen, sulphur,

$-CO-$, $-CONH-$, $-SO-$, $-SO_2-$,

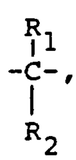, 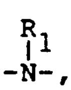, 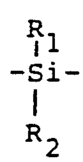, 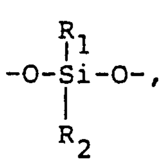, 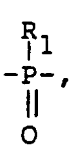, 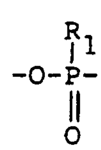 and 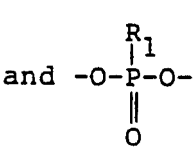

(where $R_1$ and $R_2$ are aliphatic, aromatic or alicyclic groups). In addition, these polyamines may contain substituents inert to the reaction of the present invention, such as an alkoxy group, an aryloxy group, or halogen. Examples of the above-mentioned polyamines are metaphenylenediamine, paraphenylenediamine, 4,4'-diaminodiphenylmethane, 3,3'-diaminodiphenylmethane, 4,4'-diaminodiphenylpropane, 3,3'-diaminodiphenylpropane, 4,4'-diaminodiphenylether, 3,3'-diaminodiphenylether, tolylenediamine, 4,4'-diaminodiphenylsulphone, 3,3'-diaminodiphenylsulphone, 4,4'-diaminodiphenylsulphide, para-bis (4-aminophenoxy) benzene, meta-bis (4-aminophenoxy) benzene, 1,5'-diaminonaphthalene, 3,3'-dimethyl-4,4'-diaminobiphenyl, 3,4'-diaminobenzanilide, 4-(para-aminophenoxy)-4-aminobenzanilide, 3,4'-diaminodiphenylether, 3,3'-dimethoxybenzidine, 2.4'-bis (beta-amino-tertiary butyl) toluene, bis (para-beta-amino-tertiary butylphenyl)ether, para-bis (4-aminophenoxy) diphenylsulphone, para-bis (3-aminophenoxy) diphenylsulphone, 4,4'-diaminobenzophenone, 1,3,5-triaminobenzene, 3,4,4'-triaminodiphenylether, melamine, 1,3,5-triaminonaphthalene, meta-xylenediamine, para-xylenediamine, hexamethylenediamine, heptamethylenediamine, 4,4-dimethylheptamethylenediamine, 1,4-diaminocyclohexane, diaminocyclohexylmethane and compounds represented by the following general formula,

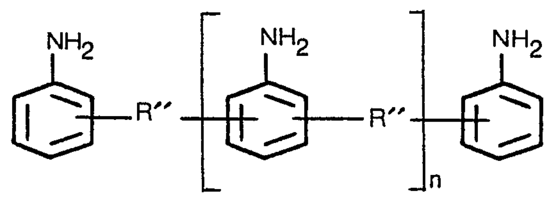

(where R'' denotes an alkylene group or an aralkylene group). Also, the above-mentioned compounds may have halogen, alkyl and alkoxy substituents.

One such polyamine or a mixture of such polyamines may be used. Among them, 4,4'-diaminodiphenylmethane, meta-phenylenediamine and 4.4'-bis (p-aminophenoxy) diphenylpropane are preferred.

Compounds selected from dicarboxylic acids having olefinic double bonds and alkyl esters and anhydrides thereof which are used in the method of the present invention (hereinafter abbreviated to acid components) include maleic anhydride, citraconic anhydride, itaconic anhydride, tetrahydrophthalic anhydride, nadic anhydride, alkylester derivatives of these anhydrides, the dicarboxylic acids corresponding to these anhydrides, and halogen-substituted and alkyl-substituted derivatives thereof. These acid components may be used singly, or a mixture of the acid components may be employed. Among them, maleic anhydride is preferred.

Oxide compounds of phosphorus used in the present invention are imide ring closing agents, including phosphorus pentaoxide, phosphorus sesquioxide, metaphosphoric acid, pyrophosphoric acid, tripolyphosphoric acid and polyphosphoric acid.

These oxide compounds of phosphorus are used singly or in admixture, and phosphorus pentaoxide and polyphosphoric acid are preferred.

The reaction of polyamine and acid component in the present invention can proceed in the absence of solvent as well as in the presence of solvent. There is a third method in which the reaction is effected in an organic medium that can dissolve the polyamine and the acid component as the starting materials but does not dissolve more than 50 weight percent of the reaction product and at least a part of the organic medium is distilled out during the reaction to bring the rest of the organic medium to less than 50% at completion of the reaction.

Solvents and media used in the present invention include nitrogen-containing aprotic polar solvents, such as N,N-dimethylformamide, N,N-diethylformamide, N,N-dimethylacetamide, N-methylpyrrolidone, N-methylcaprolactam, tetramethyl urea, hexamethylenephosphoramide, 1,3-dimethyl-2-imidazolidinone; halogenated hydrocarbons, such as methylene chloride, chloroform, carbon tetrachloride, dichloroethane, trichloroethane, tetrachloroethane, dichloroethylene, trichloroethylene, tetrachloroethylene, chlorobenzene; ethers such as tetrahydrofuran, dioxane; alcohols such as methanol, ethanol, propanol, butanol; cellosolves such as methyl cellosolve, ethyl cellosolve, propyl cellosolve; and ketones such as acetone, methylethyl ketone and cyclohexane. When the nitrogen-containing aprotic polar solvents are used the reaction proceeds in a homogeneous system as acid components, polyamines, oxide compounds of phosphorus and amidic acid compounds of the intermediate are generally soluble in these solvents. Other solvents may dissolve the polyamine and acid component as the starting materials but not more than 50 weight percent of the reaction product.

In order to use the imide ring closing agent in a solution state, a homogeneous solution may be prepared by dissolving in advance the imide ring closing agent in the above-mentioned nitrogen-containing aprotic polar solvent. Vigorous stirring is necessary in dissolving phosphorus pentaoxide in the polar solvent. In some cases, insufficient stirring would cause adhesion between undissolved solids, resulting in extremely poor solubility. Therefore, the use of a homomixer having good stirring performance is advisable. An example of dissolving procedures is described below.

The ring closing agent is added gradually with stirring into the solvent. In this case, heating, though heightening solubility, is not always necessary since heat generation occurs in the process of dissolution. In preparing a large volume of highly concentrated solution, cooling is needed owing to the vigorous generation of heat of dissolution and heat of reaction of the ring closing agent with a trace amount of water content in the solvent. The solubility varies with the combination of solvent and ring closing agent. A solution having a concentration of about 50 weight percent can usually be prepared when dissolving a solid ring closing agent in a nitrogen-containing aprotic polar solvent.

In addition, even for the bulk synthesis effected when the reaction is performed in an organic medium that dissolves the polyamine and acid component of the starting material but does not dissolve more than 50 weight percent of the reaction product, and the organic medium is distilled off during the reaction, the reaction of the present invention can be effected without posing any problem.

Under such a condition, rather better results can often be obtained because concentration of the reactants is heightened and, therefore, the reaction is accelerated. In addition, since affinity between the reaction product and organic solvent is small, it becomes easy in the after-treatment process to remove volatile compounds owing to the organic solvent contained in the reaction product.

The amount of the imide ring closing agent used in the present invention is 0.1 to 10 (more preferably 0.4 to 3) dehydrating equivalents per mole of the acid component. By "dehydrating equivalents" is meant the number of moles of imide ring closing agent necessary to remove one mole of water.

In the present invention, between 0.52 moles and 0.8 moles (preferably 0.6 to 0.8 moles) of the acid component is used for 1 mole of amino group contained in the polyamine. The presence of too great a quantity of the acid component is undesirable because the whole amino group contained in the polyamine is substantially imidized and a cured compound obtained by curing the resulting compound becomes brittle and may crack. On the other hand, when the acid component is less than 0.52 moles, the amount of double bond contained in the resulting compound is brought to an undesirably low level, and this may give insufficient ability of curing to the resulting compound.

In effecting the reaction of the present invention, there is no particular limitation on the order of adding polyamine, acid component, and oxide compound of phosphorus as the imide ring closing agent. For example, it is possible to provide polyamine, acid component and imide ring closing agent at the same time to effect the reaction and also possible to first synthesize amidic acid prepolymer by reaction of polyamine and acid component and subsequently to add the imide ring closing agent. There is an additional third method in which the imide ring closing agent is first added into solvent and subsequently the acid component and polyamine are added. This third method is advantageous as being capable of heightening the concentration of reactants in the reaction system when employing a nitrogen-containing aprotic polar solvent.

The reaction of the present invention is usually effected for 0.1 to 10 hours, preferably 0.3 to 5 hours, under a temperature condition between 10 and 200°C, preferably between 70 and 200°C. When the polyamidic acid formation and imide ring closure are conducted in two stages, the polyamidic acid forming reaction in the first stage is usually effected between 0 and 150°C, preferably between 10 and 100°C, for 0.05 to 5 hours. The dehydrating ring closure reaction of polyamidic acid is usually effected between 10 and 200°C, preferably between 70 and 200°C, for 0.05 to 5 hours.

The polyimide prepolymer thus obtained by the method according to the present invention can be subjected to subsequent curing. The polyimide prepolymer can be cured by itself with no problem posed but also various types of compounds may be used as curing agents. These curing agents include, as mentioned above, polyamines, isocyanuric acid and derivatives thereof, cyanuric acid and derivatives thereof, triazines, cyanic acid esters (including prepolymers thereof), unsaturated polyesters, epoxy resins, polyphenols, polythiols, ureas, thioureas, imines, Schiff bases, hydrazide compounds, hydrazines, amide compounds, oxazoles, barbituric acid and derivatives thereof, oxazolines, hydantoin compounds, cyanoacrylates, epoxy-modified amines, isocyanate oximes, phenolformalin resin, amino-modified novolak, alyzines, dicyanamides, imidazoles, sulphonamides, azomethine compounds, polycarboxylic acids, azadiene compounds, quinazolone compounds, piperazine compounds, indoles, thioisocyanates, acrylamides, olefin compounds and diene compounds and derivatives thereof. The polyimide prepolymer of the present invention can be cured after being blended with various types of polymers. Such polymers include various types of polyamides, various types of polyesters, fluorine resins, polysulphones, polyacetals, linear polyimides, polyamideimides, polyphenyleneoxides, polyphenylene sulphides, polyethylene, polypropylene, polystyrene, acrylonitrile-styrene copolymer, polyvinyl chloride, ABS resin, polybutadiene, ethylene-propylene rubber, NBR, acryl rubber and chloroprene rubber.

The polyimide prepolymer obtained according to the present invention can be cured not only by heating but also by irradiation of a high energy electron beam or X-rays. The polyimide prepolymer of the present invention, though having a good curing ability as it is, may be used in combination with curing accelerators such as organic peroxides or $BF_3$-amine complexes, depending upon applications.

As mentioned above, the present invention can provide a method capable of preparing in one stage in the presence of oxide compounds of phosphorus polyimide prepolymers which can give a cured moulding having practicable curing speed without the occurrence of foaming during curing, and having excellent heat resistance.

The polyimide prepolymer obtained according to the present invention may be combined with fillers.

Such fillers include glass fibre, glass beads, graphite, carbon fibre, silica, asbestos and titanium oxide. The polyimide prepolymer obtained according to the present invention may be blended with other polymers.

The polyimide prepolymer obtained according to the present invention can be used as a material for laminate sheets and moulding (such as by casting) and as varnish, coating composition, and so on. The cured product is excellent in heat resistance, chemical resistance and mechanical properties and can be used suitably for electric appliance parts, mechanical parts, automobile parts and aircraft parts.

The present invention will be further described with reference to the following examples.

Example 1

In a 1 litre flask equipped with stirrer, thermometer, dropping funnel and reflux condenser, 148.7 g (0.85 mole) of 4,4'-diaminodiphenylmethane and 300 ml of N-methylpyrrolidone (hereinafter abbreviated to NMP) were provided and dissolved with stirring. Next, a solution of 98.1 g (1.0 mole) of maleic anhydride dissolved in 200 ml of NMP was added gradually through the dropping funnel. After the addition the resulting solution was allowed to continue reaction at 30°C for one hour to form polymaleamic acid prepolymer and subsequently a solution of 71 g (0.5 mole) of phosphorus pentoxide dissolved in 150 ml of NMP was added gradually. After the addition the solution was heated to 100°C and allowed to continue reaction at that temperature for one hour.

Next, the reaction mixture was cooled to room temperature and poured into 5 litres of ice water with vigorous stirring to precipitate prepolymer and then filtration was carried out. A slurry was prepared by adding fresh water to the resulting filtrate and to this slurry a sodium carbonate aqueous solution was added until the suspension was brought to pH 9.5. The prepolymer was filtered out from the suspension and washed thoroughly with water. After the product was vacuum dried at 70°C for 15 hours, 217 g (yield: 94.1%) of prepolymer of light yellow colour was obtained.

When the prepolymer thus obtained was subjected to analyses by means of IR, NMR and alkali titration, the product proved to have an imide ring closure rate of not less than 96% with large amounts of primary amino group and double bond detected.

When the obtained polyimide prepolymer was moulded in a press for 10 min under the conditions of temperature of 230°C and a pressure of 70 kg/cm$^2$ (68,6·10$^5$ N/m$^2$), a satisfactorily cured moulding was obtained with no foam and no voids observed. After being aftercured at 200°C for 24 hours, the moulding was measured to determine its properties. The product proved to be excellent in thermal and mechanical properties, having a heat deflection temperature (ASTM-D648) of not less than 300°C and a flexural strength (ASTM—D790) of 1,420 kg/cm$^2$ (1392·10$^5$ N/m$^2$).

Comparative Example 1

Polymaleamic acid prepolymer was prepared through the same operation as that detailed in the first half of Example 1. Subsequently, the reflux condenser was replaced by a distilling out apparatus, the reaction mixture was raised to 140°C after 100 ml of toluene was added and an azeotropic mixture of toluene/water was continuously distilled out for 1.5 hours.

Subsequently the reaction mixture was cooled to room temperature and poured into 5 litres of ice water to precipitate prepolymer. After being filtered out, the prepolymer was thoroughly washed with methanol and subsequently with water and vacuum dried at 70°C for 15 hours. As a result, 215 g (yield: 94.2%) of light yellowish brown coloured prepolymer was obtained.

The obtained prepolymer had only an imide ring closure rate of 78% and 22% remained as amidic acid unit. When this prepolymer was moulded in a press under the same condition as Example 1, violent foaming occurred to make normal moulding impossible.

Comparative Example 2

After polymaleamic acid prepolymer had been prepared through the same operation as that detailed in the first half of Example 1, there were added 130 g (1.28 mole) of acetic anhydride as the imide ring closing agent, 17.5 g (0.145 mole) of dimethylaniline and 1 g (0.00383 mole) of cobalt acetate as the catalyst. After the addition the mixture was heated to 120°C and allowed to continue reaction at the temperature for 2 hours. Next, when the reaction mixture was post-treated in the same manner as in Example 1, 241 g (yield 105.3%, on the basis of provided maleic anhydride) of light yellowish brown coloured prepolymer was obtained.

When the obtained prepolymer was analysed in the same manner as in Example 1, it was found that the imide ring closure rate was as high as 98% but that no primary amino group was detected but instead a large amount of acetylamide group. Subsequently, when the obtained prepolymer was subjected to press moulding under the same condition as Example 1, then the product remained as soft as rubber even after 40 minutes of heating which was 4 times as long as Example 1 and had such extremely poor curability that it could not be taken out from the mould.

It was shown from the above results that when conventional acetic anhydride was used in place of an oxide compound of phosphorus as the imide ring closing agent of the present invention, the terminal primary amino group of the prepolymer is acetylated, thus affecting the hardening activity to a large extent.

Comparative Example 3

After polymaleamic acid prepolymer had been prepared through the same operation as that detailed in the first half of Example 1, the reflux condenser was replaced by a distillation apparatus, 10 g (0.102 mole) of sulphuric acid as the imide ring closing catalyst and 100 ml of toluene as the azeotropic dehydrating agent were added, followed by heating up to 140°C, and an azeotropic mixture of toluene/water was distilled out continuously for 1.5 hours.

Next, the reaction mixture was cooled to room temperature and poured into 5 litres of ice water with vigorous stirring to precipitate prepolymer and then filtration was carried out. The slurry was prepared by adding fresh water to the resulting filtrate and to this slurry a sodium carbonate aqueous solution was added until the solution was brought to pH 9.5. After being filtered out and washed thoroughly with water, the prepolymer was vacuum dried at 70°C for 15 hours. As a result, 214 g (yield: 93.5%) of light yellowish brown coloured prepolymer was obtained.

When the obtained prepolymer was subjected to analyses by alkali titration, IR and NMP, it was found that the imide ring closure rate was only 86% and 14% remained as amidic acid unit. When this prepolymer was press moulded under the same conditions as Example 1, foaming occurred and only a moulding containing a large amount of voids was obtained.

Example 2

Methylene chloride of 600 g, 39.2 g (0.4 mole) of maleic anhydride and 59.6 g (0.3 mole) of 4,4'-diaminodiphenylmethane were provided in a 1 litre stainless steel-made separable flask equipped with stirrer, thermometer and distillation apparatus and subsequently 30 g (0.21 mole) of phosphorus pentaoxide was added gradually with violent stirring. After the addition, methylene chloride was distilled out from the partially slurry-formed mixture while the reaction was continued by heating. After 40 minutes, when the interior temperature was 65°C and the greater part of the methylene chloride had been distilled out, the stirring was stopped and heating was continued further. The interior temperature was 150°C in 70 minutes after the start of heating and the reaction mixture was allowed to continue reacting at that temperature for 20 minutes, immediately followed by cooling.

After being taken out, the reaction mixture solid was vacuum dried at 70°C for 17 hours after such processes in succession as grinding, washing with pure water, thoroughly washing with 1% sodium carbonate aqueous solution and pure water and dehydration. As a result, 88 g (yield: 96.1%) of light brown coloured prepolymer was obtained.

When the obtained prepolymer was subjected to IR analysis, large amounts of primary amino group and double bond were detected, while amidic acid was judged to undergo almost perfect imide ring closure with no absorption of amidic acid detected.

When 60 g of the obtained polyimide prepolymer was dry blended with 40 g of glass beads and moulded in a press under the conditions of a temperature of 230°C and a pressure of 150 $kg/cm^2$ ($147 \cdot 10^5$ $N/m^2$), a sufficiently cured moulding was obtained with no foam or voids observed.

After being aftercured at 200°C for 24 hours, the obtained moulding was measured to determine its properties. As a result, it was proved that the moulding had excellent thermal and mechanical properties such as a heat deflection temperature (ASTM—D648) of not less than 300°C and a flexural strength (ASTM—D790) of 1,200 $kg/cm^2$ ($11.76 \cdot 10^5$ $N/m^2$).

Example 3

Phosphorus pentaoxide of 71 g (0.5 mole) and 200 ml of N-dimethylformamide (hereinafter abbreviated to DMF) were provided in an apparatus similar to that in Example 1 and homogeneously dissolved with vigorous stirring. After 58.8 g (0.6 mole) of maleic anhydride was added and dissolved with stirring, a solution containing 60.0 g (0.3 mole) of diaminodiphenylether and 21.6 g (0.2 mole) of meta-phenylenediamine dissolved in 250 ml of DMF was added gradually, after which the mixture was heated to 100°C and allowed to continue reaction at this temperature for one hour.

As a result of the same post-treatment as in Example 1 applied to the obtained reaction mixture, 118 g (yield: 91.1%) of light brown coloured prepolymer was obtained. When the obtained prepolymer was subjected to the same analysis as Example 1, the imide ring closure rate was found to be not less than 96% and large amounts of primary amino group and double bond of curing active site were detected.

When 60 g of the prepolymer was blended with 40 g of glass fibre 3 mm long and press moulded for 10 min at 230°C and 150 $kg/cm^2$ ($147 \cdot 10^5$ $N/m^2$), a sufficiently cured moulding was obtained with no observable foam or voids. After being aftercured at 200°C for 24 hours, the moulding was measured to determine its properties. As a result, the product proved to be excellent, with heat deflection temperature (ASTM—D648) of not less than 300°C and flexural strength of 1,350 $kg/cm^2$ ($1323 \cdot 10^5$ $N/m^2$).

Example 4

DMF of 250 ml and 133 g (0.325 mole) of 4,4'-bis(p-aminophenoxy) diphenylpropane, which had been provided in a similar apparatus to that in Example 1, were dissolved with stirring. Next, a solution containing 65 g (0.5 mole) of monomethyl maleate dissolved in 100 ml of DMF was gradually added through the dropping funnel. After one hour of reaction at 60°C, a solution containing 78 g (ca. 0.6 dehydrating equivalent) of 114% polyphosphoric acid dissolved in 150 ml of DMF was gradually added and

subsequently the mixture was heated to 100°C, followed by one hour of reaction at this temperature.

When the reaction mixture was subjected to the same post-treatment as Example 1, 160 g (yield: 92.5%) of light brown coloured prepolymer was obtained.

As a result of subjecting the obtained prepolymer to the same analysis as Example 1, the ring closure rate was found to be not less than 96% and primary amino group and double bond of the curing active site were detected in large amounts.

A DMF solution containing 45 weight% of the prepolymer was prepared and glass cloth subjected to silane treatment was impregnated with the obtained solution, followed by 30 minutes of drying at 100°C and another one hour of drying at 160°C in a drier. As a result, a prepreg having 43% of resin adhesion was obtained. The prepreg was laminated and pressed with heating for 1 hour at 220°C and 50 kg/cm$^2$ (49·10$^5$ N/m$^2$). As a result, a laminate sheet having high touchness and no distortion was obtained. It had an excellent flexural strength (ASTM—790) of 7,000 kg/cm$^2$ (6860·10$^5$ N/m$^2$).

## Example 5

Synthesis and post-treatment were conducted in the same manner as in Example 1, with the exception of using a mixture of 68.7 g (0.7 mole) of maleic anhydride and 48.0 g (0.3 mole) of nadic anhydride in place of 98.1 g (1.0 mole) of maleic anhydride. As a result, 233 g (yield: 94.2%) of light yellow coloured prepolymer was obtained.

A 35 wt% DMF solution of the obtained prepolymer was prepared and carbon fibre cloth (Toray "Torayca" cloth #6142) was impregnated with the obtained solution, followed by 30 minutes of drying at 100°C and another one hour of drying at 160°C in a hot air drier. The result was a prepreg having 40% of resin adhesion. The prepreg was laminated and heat pressed for one hour at 280°C and 50 kg/cm$^2$ (49·10$^5$ N/m$^2$) to prepare a laminate sheet having high toughness and no distortion. After being aftercured at 280°C for 24 hours, the laminate sheet was measured to determine properties. The sheet proved to have excellent thermal and mechanical properties such as a flexural strength of 8,000 kg/cm$^2$ (7840·10$^5$ N/m$^2$) and flexural modulus of 550 t/cm$^2$ (ca. 539·10$^8$ N/m$^2$) at room temperatures and a flexural strength of 7,900 kg/cm$^2$ (7742·10$^5$ N/m$^2$) and flexural modulus of 520 t/cm$^2$ (ca. 510·10$^8$ N/m$^2$) at 200°C.

## Example 6

Maleic anhydride of 98.1 g (1.0 mole) and 200 ml of NMP was provided in a similar apparatus to that in Example 1 and dissolved with stirring. Next, a solution containing 128.9 g (0.65 mole) of 4,4'-diaminodiphenylmethane and 43.2 g (0.1 mole) of p-bis (4-aminophenoxy) diphenylsulphone dissolved in 300 ml of NMP was added gradually. After one hour of reaction at 30°C following the addition, 142 g (1.0 mole) of phosphorus pentaoxide in a solid state was added, after which the reaction mixture was heated to 90°C, followed by one hour of reaction at this temperature.

When the reaction mixture was subjected to post-tfeat in the same manner as in Example 1, then 230 g (yield: 91.2%) of light brown prepolymer was obtained.

When the obtained prepolymer was analysed in the same manner as in Example 1, the ring closure rate was found to be not less than 96% and primary amino group and double bond of the curing active site were detected in large amounts.

As a result of press moulding the obtained prepolymer at 230°C and 70 kg/cm$^2$ (68.6·10$^5$ N/m$^2$) for 10 minutes, a sufficiently cured moulding was obtained without foam or voids. After being aftercured at 200°C for 24 hours, the moulding was measured to determine its properties. The moulding proved to have excellent properties such as a flexural strength (ASTM—D790) of 1,400 kg/cm$^2$ (1372·10$^5$ N/m$^2$).

## Example 7

98.1 g (1.0 mole) of finely pulverized maleic anhydride, 148.7 g (0.75 mole) of finely pulverized 4,4'-diaminodiphenylethane and 71 g (0.5 mole) of phosphorus pentaoxide were thoroughly mixed together in a Henshel mixer. The content was transferred to a stainless steel-made vat, gradually heated to 150°C over one hour in an oven, kept at this temperature for 20 minutes to continue reaction and thereafter cooled immediately.

After being taken out, the reaction mixture was vacuum dried at 70°C for 17 hours after such processes in succession as grinding, washing with pure water, thoroughly washing with 1% sodium carbonate aqueous solution and pure water and desiccation. As a result, 222 g (yield: 97.0%) of light brown prepolymer was obtained.

When the obtained prepolymer was subjected to IR analysis, then large amounts of primary amino group and double bond were detected. On the other hand, as no absorption of amide acid was detected, nearly perfect imide ring closure was judged to be performed.

When 60 g of the obtained polyimide prepolymer was blended with 40 g of graphite and press moulded for 10 minutes at 230°C and 150 kg/cm$^2$ (147·10$^5$ N/m$^2$), a sufficiently cured moulding was obtained without observable foam or voids. After being aftercured at 200°C for 24 hours, the moulding showed excellent abrasion characteristics.

**Claims**

1. A method for preparing polyimide prepolymers, which comprises effecting a reaction between a polyamine which has the following general formula (I),

$$R{-}(NH_2)_n \qquad (I)$$

in which R is an organic group having not less than 2 carbon atoms and n is an integer of 2 or above, and a compound selected from dicarboxylic acids having olefinic double bonds and alkyl esters and anhydrides thereof in the ratio of 0.52 to 0.8 mole of the latter per mole of amino group contained in said polyamine in the presence of an oxide compound of phosphorus in an amount of 0.1—10 dehydrating equivalents per mole of the acid component.

2. A method according to claim 1 wherein said oxide compound of phosphorus is selected from phosphorus pentaoxide and polyphosphoric acid.

3. A method according to claim 1 or claim 2, wherein said R in formula (I) is a benzene ring or a radical consisting of not less than 2 benzene rings connected by a linkage selected from a direct link and the bonding groups —O—, —S—, —CO—, $SO_2$— and

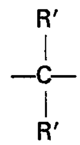

wherein R′ is selected from hydrogen, an aliphatic group, an aromatic group and an alicyclic group, the said benzene rings being unsubstituted (apart from the amino groups) or substituted by halogen, alkyl, alkoxy or aryloxy.

4. A method according to claim 3, wherein said polyamine is 4,4′-diaminodiphenylmethane.

5. A method according to any preceding claim wherein the acid component is a dicarboxylic anhydride having an olefinic double bond.

6. A method according to claim 5 wherein said dicarboxylic anhydride having an olefinic double bond is maleic anhydride.

7. A method according to any preceding claim wherein the oxide compound of phosphorus is used in an amount of 0.4 to 3 dehydrating equivalents per mole of the acid component.

8. A method according to any preceding claim wherein the acid component is used in an amount of 0.6 to 0.8 mole per mole of amino group contained in the polyamine.

9. A method according to any preceding claim wherein the reaction is effected in the absence of solvent.

10. A method according to any one of claims 1 to 8, wherein the reaction is effected in an aprotic polar solvent.

11. A method according to claim 10, wherein the reaction is started after the oxide compound of phosphorus is previously dissolved in an aprotic polar solvent.

12. A method according to 10 or claim 11, wherein said aprotic polar solvent is selected from dimethylformamide, N-methylpyrrolidone and dimethylacetamide.

13. A method according to any one of claims 1 to 8 wherein the reaction is started in an organic medium capable of dissolving the reactants but not dissolving more than 50 weight% of the resulting product.

14. A method according to claim 13 wherein said organic medium is a halogenated hydrocarbon.

15. A method according to any preceding claim wherein the reaction is effected at a temperature of between 70 and 200°C.

**Patentansprüche**

1. Verfahren zur Herstellung von Polyimidprepolymeren, das umfaßt die Durchführung einer Reaktion zwischen einem Polyamin der allgemeinen Formel (I)

$$R{-}(NH_2)_n \qquad (I)$$

worin R eine organische Gruppe mit nicht weniger als 2 Kohlenstoffatomen und n eine ganze Zahl von 2 oder mehr bedeuten,

und einer Verbindung, ausgewählt aus Dicarbonsäuren mit olefinischen Doppelbindungen und Alkylestern und Anhydriden davon im Verhältnis 0, 52 bnis 0,8 Mol der zuletzt genannten Verbindung pro Mol Aminogruppe in dem Polyamin in Gegenwart einer Oxidverbindung von Phosphor in einer Menge von 0,1 bis 10 dehydratisierenden Äquivalenten pro Mol der Säurekomponente.

2. Verfahren nach Anspruch 1, worin die Oxidverbindung von Phosphor ausgewählt wird aus

Phosphorpentoxid und Polyphosphorsäure.

3. Verfahren nach Anspruch 1 oder 2, worin R in der Formel (I) einen Benzolring oder einen Rest, der besteht aus nicht weniger als 2 Benzolringen, die durch eine Brückenbindung verbunden sind, ausgewählt aus einer direkten Bindung und den verbindenden Gruppen —O—, —S—, —CO—, $SO_2$— und

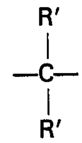

worin R′ ausgewählt wird aus Wasserstoff, einer aliphatischen Gruppe, einer aromatischen Gruppe und einer alicyclischen Gruppe, bedeutet, wobei die Benzolringe (abgesehen von den Aminogruppen) unsubstituiert sind oder substituiert sind durch Halogen, Alkyl, Alkoxy oder Aryloxy.

4. Verfahren nach Anspruch 3, dadurch gekennzeichnet, daß es sich bei dem Polyamin um 4,4′-Diaminodiphenylmethan handelt.

5. Verfahren nach einem der vorhergehenden Ansprüche, worin die Säurekomponente ein Dicarbonsäureanhydrid mit einer olefinischen Doppelbindung ist.

6. Verfahren nach Anspruch 5, worin das Dicarbonsäureanhydrid mit einer olefinischen Doppelbindung Maleinsäureanhydrid ist.

7. Verfahren nach einem der vorhergehenden Ansprüche, worin die Oxidverbindung von Phosphor in einer Menge von 0,4 bis 3 dehydratisierenden Äquivalenten pro Mol der Säurekomponente verwendet wird.

8. Verfahren nach einem der vorhergehenden Ansprüche, worin die Säurekomponente in einer Menge von 0,6 bis 0,8 Mol pro Mol der in dem Polyamin enthaltenen Aminogruppe verwendet wird.

9. Verfahren nach einem der vorhergehenden Ansprüche, worin die Reaktion in Abwesenheit eines Lösungsmittels durchgeführt wird.

10. Verfahren nach einem der Ansprüche 1 bis 8, worin die Reaktion in einem aprotischen polaren Lösungsmittel durchgeführt wird.

11. Verfahren nach Anspruch 10, worin die Reaktion gestartet wird, nachdem die Oxidverbindung von Phosphor vorher in einem aprotischen polaren Lösungsmittel gelöst worden ist.

12. Verfahren nach Anspruch 10 oder 11, worin das aprotische polare Lösungsmittel ausgewählt wird aus Dimethylformamid, M-Methylpyrrolidon und Dimethylacetamid.

13. Verfahren nach einem der Ansprüche 1 bis 8, worin die Reaktion in einem organischen Medium, das die Reaktanten auflösen kann, das jedoch nicht mehr als 50 Gew.-% des resultierenden Produkts auflösen kann, gestartet wird.

14. Verfahren nach Anspruch 13, worin das organische Medium ein halogenierter Kohlenwasserstoff ist.

15. Verfahren nach einem der vorhergehenden Ansprüche, worin die Reaktion bei einer Temperatur zwischen 70 und 200°C durchgeführt wird.

**Revendications**

1. Méthode de préparation de prépolymères de polyimide, qui consiste à effectuer une réaction entre une polyamine qui a la formule générale suivante (I):

$$R{+}NH_2)_n \qquad (I)$$

dans laquelle R est un groupe organique n'ayant pas moins de 2 atomes de carbone et n est un nombre entier de 2 ou au delà, et un composé choisi parmi des acides dicarboxyliques ayant des doubles liaisons oléfiniques et leurs alkyl esters et anhydrides au rapport de 0,52 à 0,8 mole de ce dernier par mole du groupe amino contenu dans ladite polyamine en présence d'un composé d'oxyde de phosphore en une quantité de 0,1—10 équivalents de déshydratation par mole du composant d'acide.

2. Méthode selon la revendication 1 où ledit composé d'oxyde de phosphore est choisi parmi le pentaoxyde de phosphore et l'acide polyphosphorique.

3. Méthode selon la revendication 1 ou la revendication 2 où ledit R dans la formule (I) est un noyau benzène ou un radical consistant en pas moins de deux noyaux benzène qui sont connectés par une liaison choisie parmi une liaison directe et les groupes liants —O—, —S—, —CO—, $SO_2$— et

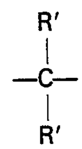

où R' est choisi parmi l'hydrogène, un groupe aliphatique, un groupe aromatique et un groupe alicyclique, lesdits noyaux benzène étant non substitués (à part les groupes amino) ou substitués par halogène, alkyle, alcoxy ou aryloxy.

4. Méthode selon la revendication 3, où ladite polyamine est le 4,4'-diaminodiphénylméthane.

5. Méthode selon l'une quelconque des revendications précédentes où le composant d'acide est un anhydride dicarboxylique ayant une double liaison oléfinique.

6. Méthode selon la revendication 5 où ledit anhydride dicarboxylique ayant une double liaison oléfinique est un anhydride maléique.

7. Méthode selon l'une quelconque des revendications précédentes où le composé d'oxyde de phosphore est utilisé en une quantité de 0,4 à 3 équivalents déshydratants par mole du composant d'acide.

8. Méthode selon l'une quelconque des revendications précédentes où le composant d'acide est utilisé en une quantité de 0,6 à 0,8 mole par mole du groupe amino contenu dans la polyamine.

9. Méthode selon toute revendication précédente où la réaction est effectuée en l'absence de solvant.

10. Méthode selon toute revendication 1 à 8 où la réaction est effectuée dans un solvant aprotique polaire.

11. Méthode selon la revendication 10, où la réaction débute après avoir au préalable dissous le composé d'oxyde de phosphore dans un solvant aprotique polaire.

12. Méthode selon la revendication 10 ou la revendication 11, où ledit solvant aprotique polaire est choisi parmi le diméthylformamide, la N-méthylpyrrolidone et le diméthylacétamide.

13. Méthode selon l'une quelconque des revendications 1 à 8 où la réaction débute dans un milieu organique capable de dissoudre les réactifs mais de ne pas dissoudre plus que 50% en poids du produit résultant.

14. Méthode selon la revendication 13 où ledit milieu organique est un hydrocarbure halogéné.

15. Méthode selon toute revendication précédente où la réaction est effectuée à une température comprise entre 70 et 200°C.